# EUROPEAN PATENT APPLICATION

(11) **EP 1 566 368 A2**
(43) Date of publication of application: **24.08.2005**
(21) Application number: 05003417.2
(22) Date of filing: 17.02.2005
(51) Int. Cl.: C03C 17/00

(54) **Glass powder-containing resin composition, transfer film and process for manufacturing a plasma display panel comprising the transfer film**

(30) Priority: 20.02.2004 JP 2004044554; 18.10.2004 JP 2004302460
(71) Applicant: JSR Corporation, Tokyo 104-0045 (JP)
(72) Inventor: Kawagishi, Seiji, Chuo-ku Tokyo 104-0045 (JP); Yamashita, Takanori, Chuo-ku Tokyo 104-0045 (JP)
(74) Representative: TBK-Patent

(57) **Abstract**

A glass powder-containing resin composition comprising (A) 100 parts by weight of a lead-free inorganic glass powder and (B) 30 to 70 parts by weight of a binder resin, and a transfer film obtained from this composition.

A dielectric layer having excellent surface smoothness can be formed efficiently, the film forming material layer has excellent flexibility so that its surface is not cracked by bending, and the transfer film has excellent flexibility and can be easily rolled. Since the film forming material layer exhibits suitable adhesion, the handling properties of the transfer film are excellent, and the transferability of the film forming material layer, that is, the thermal adhesion of the film forming material layer to the substrate is excellent.

## Description

### Field of the Invention

The present invention relates to a glass powder-containing resin composition, a transfer film obtained from the glass powder-containing resin composition and a process for manufacturing a plasma display panel comprising the transfer film.

### Description of the Prior Art

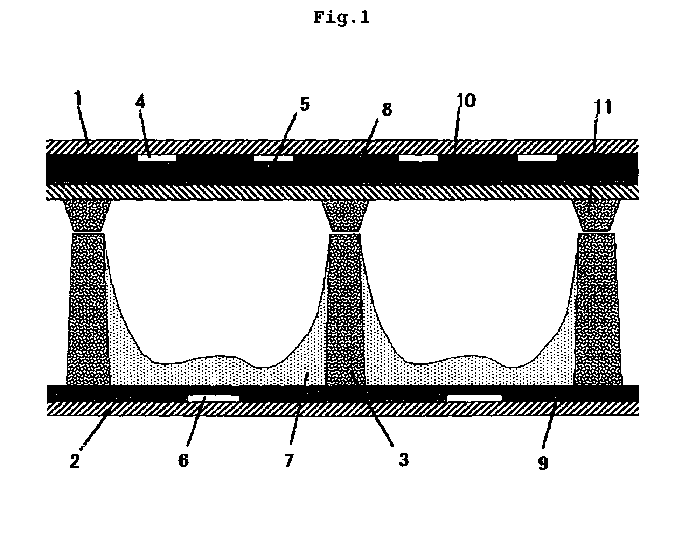

Plasma display panels (to be abbreviated as PDP hereinafter) are now attracting attention as plate-like fluorescent displays. Fig. 1 shows the sectional form of an AC type PDP. In Fig. 1, reference numerals 1 and 2 denote glass substrates arranged opposed to each other, 3 and 11 denote ribs, and cells are defined by the glass substrates 1 and 2, the rear ribs 3 and the front ribs 11. Numeral 4 represents a transparent electrode fixed on the glass substrate 1, 5 a bus electrode formed on the transparent electrode 4 to reduce the resistance of the transparent electrode 4, 6 an address electrode fixed on the glass substrate 2, 7 a fluorescent substance held in the cell, 8 a dielectric layer formed on the surface of the glass substrate 1 to cover the transparent electrodes 4 and the bus electrodes 5, 9 a dielectric layer formed on the surface of the glass substrate 2 to cover the address electrodes 6, and 10 a protective film made of magnesium oxide. In a color PDP, a color filter (red, green or blue) or a black matrix may be interposed between the glass substrate and the dielectric layer to obtain a high-contrast image.

A general process for manufacturing a PDP comprises a front plate production step, rear plate production step and assembly step. In the front plate production step and the rear plate production step, electrodes are formed on the glass substrates and dielectric layers containing low-melting glass as the main component are formed to cover the electrodes and the glass substrates. The process for forming this dielectric layer preferably comprises the steps of preparing a paste composition containing a low-melting glass powder, forming a film forming material layer made of this paste composition excluding a solvent on the substrate and baking the film forming material layer. To form the film forming material layer on the substrate, the paste composition is generally applied to the substrate by screen printing. Particularly when a transfer film comprising a film forming material layer formed by applying the paste composition to a support film is used and the film forming material layer of the transfer film is transferred to a substrate, a dielectric layer having excellent uniformity in film thickness and surface evenness can be formed advantageously.

Low-melting glass containing lead is generally used as the low-melting glass which is the main component of the dielectric layer. However, as lead elutes by scrapping and reclamation, the glass involves an environmental problem and a quick solution to this problem is desired (JP-A 9-102273, JP-A 2000-128567, JP-A 2000-226231, JP-A 2000-226232 and JP-A 2000-86286) (the term "JP-A" as used herein means an "unexamined published Japanese patent application").

### Summary of the Invention

However, when lead-free glass frit is used in the paste composition of the prior art, it may be difficult to make paste and a composition which can be baked in an appropriate time may not be obtained. When the above transfer film is formed, it may have unsatisfactory flexibility or may not have high transferability. Further, a dielectric layer obtained from the transfer film is not excellent in surface smoothness and uniformity in film thickness.

The present invention has been made under the above situation.

It is a first object of the present invention to provide a glass powder-containing resin composition and a transfer film both of which have no problem with working environment and the disposal of their wastes.

It is a second of the present invention to provide a transfer film which is excellent in the flexibility of a film forming material layer.

It is a third object of the present invention to provide a transfer film which is excellent in the transferability of a film forming material layer, that is, the thermal adhesion of the film forming material layer to a substrate.

It is a fourth object of the present invention to provide a process for manufacturing a PDP, capable of forming a dielectric layer having excellent surface smoothness advantageously.

It is a fifth object of the present invention to provide a process for manufacturing a PDP comprising a dielectric layer having excellent uniformity in film thickness.

The above objects and advantages of the present invention are attained by a glass powder-containing resin composition which comprises [A] 100 parts by weight of a glass powder made of a lead-free inorganic material and [B] 30 to 70 parts by weight of a binder resin.

The above objects and advantages of the present invention are attained by a transfer film comprising a film forming material layer made of the above glass powder-containing resin composition.

Further, the PDP manufacturing process of the present invention comprises the steps of forming a film forming material layer made of the glass powder-containing resin composition of the present invention on a substrate and baking the film forming material layer to form a dielectric layer on the substrate.

### Brief Description of the Drawings

Fig. 1 is a diagram showing the sectional form of an AC type plasma display panel;
Fig. 2 is a sectional view of the transfer film of the present invention; and
Fig. 3 is a sectional view showing the layer constitution of the transfer film.

### Detailed Description of the Preferred Embodiment

The glass powder-containing resin composition (to be simply referred to as "composition" hereinafter) of the present invention will be described in detail hereinunder.

The composition of the present invention comprises a glass powder and a binder resin as essential ingredients and is generally a paste composition containing a solvent.

### Glass powder

The glass powder used in the present invention is made of a lead-free inorganic material. By using lead-free glass, a PDP which does not cause an environmental problem such as the elution of lead by scrapping and reclamation can be obtained.

Preferred examples of the glass powder include (1) a mixture of zinc oxide, phosphorus oxide and silicon oxide (ZnO-p₂O₅-SiO₂), (2) a mixture of zinc oxide, boron oxide and silicon oxide (ZnO-B₂O₃-SiO₂), (3) a mixture of zinc oxide, boron oxide and potassium oxide (ZnO-B₂O₃-K₂O), (4) a mixture of phosphorus oxide, boron oxide and aluminum oxide (P₂Oₛ-B₂O₃-Al₂O₃), (5) a mixture of zinc oxide, phosphorus oxide, silicon oxide and aluminum oxide (ZnO-P₂O₅-SiO₂-Al₂O₃), (6) a mixture of zinc oxide, phosphorus oxide and titanium oxide (ZnO-P₂O₅-TiO₂), (7) a mixture of zinc oxide, boron oxide, silicon oxide and potassium oxide (ZnO-B₂O₃-SiO₂-K₂O), (8) a mixture of zinc oxide, boron oxide, silicon oxide, potassium oxide and calcium oxide (ZnO-B₂O₃-SiO₂-K₂O-CaO), (9) a mixture of zinc oxide, boron oxide, silicon oxide, potassium oxide and aluminum oxide (ZnO-B₂O₃-SiO₂-K₂O-Al₂O₃), (10) a mixture of zinc oxide, boron oxide, silicon oxide, potassium oxide, calcium oxide and aluminum oxide (ZnO-B₂O₃-SiO₂-K₂O-CaO-Al₂O₃), and (11) a mixture of zinc oxide, boron oxide, silicon oxide, potassium oxide, aluminum oxide, calcium oxide and strontium oxide (ZnO-B₂O₃-SiO₂-K₂O-Al₂O₃-CaO-SrO). Out of these mixtures, a mixture of zinc oxide, boron oxide, silicon oxide, potassium oxide, calcium oxide and aluminum oxide (ZnO-B₂O₃ -SiO₂-K₂O-CaO-Al₂O₃) is particularly preferred.

The softening point of the glass powder used in the present invention is preferably 400 to 650° C, more preferably 450 to 600°C. When the softening point of the glass powder is lower than 450°C, in the step of baking a film forming material layer made of the composition, the glass powder is molten in the stage where an organic material such as the binder resin is not completely dissolved and removed, and part of the organic material remains in the formed dielectric layer. As a result, the dielectric layer may be colored with the result of a reduction in the transmittance of the dielectric layer. When the softening point of the glass powder is higher than 650° C, it is necessary to bake the glass powder at a temperature higher than that, whereby the glass substrate may be distorted.

The glass powder used in the present invention preferably has a specific gravity of 2.0 to 4.0. The specific gravity of the glass powder in the present invention was measured by a pycnometering method after glass was powdered. Stated more specifically, it was measured with a Gay-Lussac type pycnometer using xylene (25°C) as an immersion liquid after about 5 hours of vacuum deaeration.

### Binder resin

The binder resin constituting the composition of the present invention is preferably an acrylic resin.

When the acrylic resin is contained as the binder resin, the formed film forming material layer exhibits excellent adhesion, particularly thermal adhesion to a substrate. Therefore, when the composition of the present invention is applied to a support film to produce a transfer film, the obtained transfer film is excellent in the transferability of the film forming material layer, that is, the thermal adhesion of the film forming material layer to the substrate.

The acrylic resin constituting the composition of the present invention is selected from (co)polymers which have suitable tackiness to bond the lead-free glass powder and are completely oxidized and removed by baking the film forming material layer at 450 to 600°C, for example.

Examples of the acrylic resin includes a homopolymer of a (meth)acrylate compound represented by the following formula (1), a copolymer of two or more (meth)acrylate compounds represented by the following formula (1) and a copolymer of a (meth)acrylate compound represented by the following formula (1) and another copolymerizable monomer. In the last copolymer, the amount of the comonomer derived from a (meth)acrylate compound represented by the following formula (1) is preferably 70 wt% or more, more preferably 90 wt% or more. 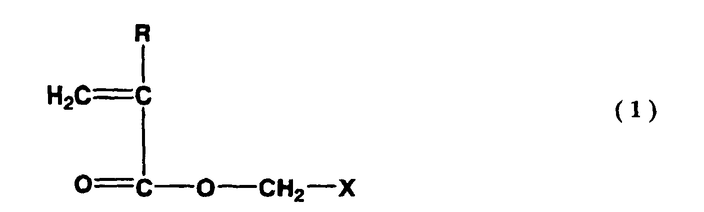 (wherein R is a hydrogen atom or methyl group, and X is a hydrogen atom or monovalent organic group.)

Illustrative examples of the (meth)acrylate compound represented by the above formula (1) include alkyl (meth)acrylates such as methyl (meth)acrylate, ethyl (meth)acrylate, n-propyl (math)acrylate, isopropyl (meth)acrylate, n-butyl (meth)acrylate, isobutyl (meth)acrylate, t-butyl (meth)acrylate, n-pentyl (meth)acrylate, amyl (meth)acrylate, isoamyl (meth)acrylate, n-hexyl (meth)acrylate, n-heptyl (meth)acrylate, n-octyl (meth)acrylate, isoocty (meth)acrylate, 2-ethylhexyl (meth)acrylate, n-nonyl (meth)acrylate, n-decyl (meth)acrylate, isodecyl (meth)acrylate, n-undecyl (meth)acrylate, n-dodecyl (meth)acrylate, lauryl (meth)acrylate, stearyl (meth)acrylate and isostearyl (meth)acrylate; hydroxyalkyl (meth)acrylates such as hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate; phenoxyalkyl (meth)acrylates such as phenoxyethyl (meth)acrylate and 2-hydroxy-3-phenoxypropyl (meth)acrylate; alkoxyalkyl (meth)acrylates such as 2-methoxyethyl (moth)acrylate, 2-ethoxyethyl (meth)acrylate, 2-propoxyethyl (meth)acrylate, 2-butoxyethyl (meth)acrylate and 2-methoxybutyl (meth)acrylate; polyalkylene glycol (meth)acrylates such as polyethylene glycol mono(meth)acrylate, ethoxydiethylene glycol (meth)acrylate, methoxypolyethylene glycol (meth)acrylate, phenoxypolyethylene glycol (meth)acrylate, nonylphenoxypolyethylene glycol (meth)acrylate, polypropylene glycol (meth)acrylate, methoxypolypropylene glycol (meth)acrylate, ethoxypolypropylene glycol (meth)acrylate and nonylphenoxypolypropylene glycol (meth)acrylate; cycloalkyl (meth)acrylates such as cyclohexyl (meth)acrylate, 4-butylcyclohexyl (meth)acrylate, dicyclopentanyl (meth)acrylate, dicyclopentenyl (meth)acrylate, dicyclopentadienyl (meth)acrylate, bornyl (meth)acrylate, isobornyl (meth)acrylate and tricyclodecanyl (meth)acrylate; and benzyl (meth)acrylate, tetrahydrofurfuryl (meth)acrylate, and glycidyl (meth)acrylate.

The binder resin used in the present invention is particularly preferably a polymer having a structural unit represented by the following formula (I) (to be referred to as "structural unit (I)" hereinafter): 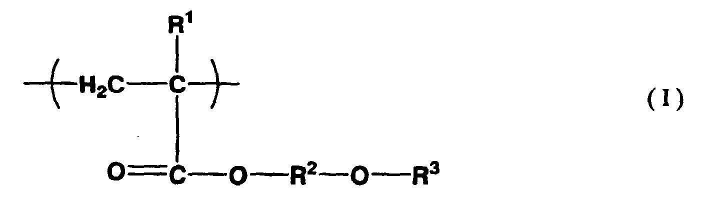 wherein R¹ is a hydrogen atom or methyl group, R² is a methylene group or alkylene group having 2 to 4 carbon atoms, and R³ is an alkyl group having 1 to 4 carbon atoms.

A structural unit of the above formula (I) in which R¹ is a methyl group is particularly preferred.

By using a polymer having the above structural unit (I), the suitable adsorption of the polymer to the glass powder is obtained and the fusion of the glass powder is made advantageous. Therefore, a glass powder-containing resin composition capable of forming a dielectric layer having excellent surface smoothness can be obtained even by low-temperature short-term baking.

The polymer having the structural unit (I) is obtained from a compound represented by the following formula (i) (to be referred to as "compound (i)" hereinafter), that is, a (meth)acrylate having an alkoxyalkyl group as a monomer component. The polymer is selected from a homopolymer of the compound (i), a copolymer of two or more compounds (i) and a copolymer of the compound (i) and another copolymerizable monomer. Out of the compounds (i), a compound of the formula (i) in which R¹ is a methyl group, that is, a methacrylate having an alkoxyalkyl group is particularly preferred. 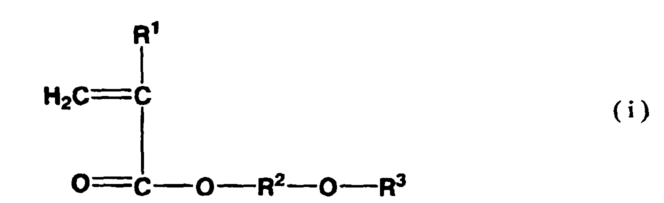 (wherein R¹, R² and R³ are as defined in the above formula (I).)

Preferred examples of the compound (i) include 2-methxoyethyl (meth)acrylate, 2-ethoxyethyl (meth)acrylate, 2-n-propoxyethyl (meth)acrylate, 2-n-butoxyethyl (meth)acrylate and 2-methoxy-n-butyl (meth)acrylate. Out of these, 2-methoxyethyl (meth)acrylate and 2-ethoxyethyl (meth)acrylate are particularly preferred.

The amount of the structural unit (I) in the polymer having the structural unit (I) is 0.1 to 100 wt%, preferably 0.1 to 20 wt% based on the total of all the structural units of the polymer.

Structural units other than the structural unit (I) of the polymer having the structural unit (I) include structural units derived from other (meth)acrylates and structural units derived from other monomers copolymerizable with the compound (i), which are mentioned above.

Out of these, alkyl (meth)acrylates and hydroxyalkyl (meth)acrylates are preferred, and n-butyl (meth)acrylate, 2-ethylhexyl (meth)acrylate, lauryl (meth)acrylate, isodecyl (meth)acrylate and 2-hydroxypropyl (meth)acrylate are particularly preferred as (meth)acrylate compounds.

The other copolymerizable monomers are not particularly limited if they can be copolymerized with the above (meth)acrylate compounds and include unsaturated carboxylic acids such as (meth)acrylic acid, vinyl benzoic acid, maleic acid and vinylphthalic acid; and vinyl group-containing radically polymerizable compounds such as vinyl benzyl methyl ether, vinyl glycidyl ether, styrene, α-methylstyrene, butadiene and isoprene.

Preferred examples of the acrylic resin include a copolymer of n-butyl (meth)acrylate. 2-ethylhexyl (meth)acrylate and 2-methoxyethyl (meth)acrylate.

The acrylic resin used in the present invention may not contain the above structural unit (I). Examples of the acrylic resin include polymethyl methacrylate, polybutyl methacrylate and a copolymer of methyl methacrylate and butyl methacrylate.

As for the molecular weight of the acrylic resin constituting the composition of the present invention, the weight average molecular weight in terms of polystyrene measured by gel permeation chromatography (to be abbreviated as "GPC" hereinafter) (to be simply referred to as "weight average molecular weight" hereinafter) of the acrylic resin is preferably 4.000 to 400,000. It is more preferably 4,000 to 300,000, particularly preferably 10,000 to 200,000.

The amount of the binder resin in the composition of the present invention is 30 to 70 parts by weight, preferably 30 to 50 parts by weight based on 100 parts by weight of the glass powder. When the amount of the binder resin is too small, the glass powder cannot be bonded and held securely and when the amount of the binder resin is too large, the baking step takes a long time and the formed sintered body, for example, the dielectric layer may not have satisfactory strength and film thickness disadvantageously. By setting the amount of the binder resin to the above range, a paste composition capable of forming a film forming material layer having excellent surface smoothness and uniformity in film thickness can be obtained and the obtained transfer film has excellent flexibility and transferability.

### Solvent

The composition of the present invention generally contains a solvent. Preferably, the solvent is excellent in affinity for the lead-free glass powder and the solubility of the binder resin, can provide suitable viscosity to the obtained composition and can be easily vaporized and removed by drying.

Examples of the solvent include ketones such as diethyl ketone, methyl butyl ketone, dipropyl ketone and cyclohexanone; alcohols such as n-pentanol, 4-methyl-2-pentanol, cyclohexanol and diacetone alcohol; ether-based alcohols such as ethylene glycol monomethyl ether, ethylene glycol monoethyl ether, ethylene glycol monobutyl ether, propylene glycol monomethyl ether and propylene glycol monoethyl ether; unsaturated aliphatic alkyl monocarboxylates such as n-butyl acetate and amyl acetate; lactates such as ethyl lactate and n-butyl lactate; and ether-based esters such as methyl cellosolve acetate, ethyl cellosolve acetate, propylene glycol monomethyl ether acetate and ethyl-3-ethoxypropionate. They may be used alone or in combination of two or more.

The amount of the solvent in the composition of the present invention is preferably 40 parts or less by weight, more preferably 5 to 30 parts by weight based on 100 parts by weight of the lead-free glass powder so as to maintain the viscosity of the composition at a preferred range.

### Dispersant

The composition of the present invention preferably contains a dispersant. The dispersant is preferably a silane coupling agent represented by the following formula (2) (saturated alkyl group-containing (alkyl)alkoxysilane): 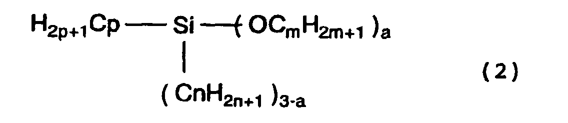 wherein p is an integer of 3 to 20, m is an integer of 1 to 3, n is an integer of 1 to 3, and a is an integer of 1 to 3.

In the above formula (2), p indicative of the number of carbon atoms of the saturated alkyl group is an integer of 3 to 20, preferably 4 to 16.

Even when a saturated alkyl group-containing (alkyl)alkoxysilane of the above formula (2) in which p is an integer of less than 3 is contained, the obtained film forming material layer may not have satisfactory flexibility. Since a saturated alkyl group-containing (alkyl)alkoxysilane of the above formula (2) in which p is an integer of more than 20 has high decomposition temperature and the glass powder is molten in the stage where the organic material (the above silane derivative) is not completely dissolved and removed in the step of baking the obtained film forming material layer, part of the organic material may remain in the formed dielectric layer with the result of a reduction in the transmittance of the dielectric layer.

Illustrative examples of the silane coupling agent represented by the above formula (2) include saturated alkyl dimethylmethoxysilanes (a = 1, m = 1, n = 1) such as n-propyl dimethylmethoxysilane, n-butyl dimethylmethoxysilane, n-decyl dimethylmethoxysilane, n-hexadecyl dimethylmethoxysilane and n-eicosane dimethylmethoxysilane; saturated alkyl diethylmethoxysilanes (a = 1, m = 1, n = 2) such as n-propyl diethylmethoxysilane, n-butyl diethylmethoxysilane, n-decyl diethylmethoxysilane, n-hexadecyl diethylmethoxysilane and n-eicosane diethylmethoxysilane; saturated alkyl dipropylmethoxysilanes (a = 1, m = 1, n = 3) such as n-butyl dipropylmethoxysilane, n-decyl dipropylmethoxysilane, n-hexadecyl dipropylmethoxysilane and n-eicosane dipropylmethoxysilane; saturated alkyl dimethylethoxysilanes (a = 1, m = 2, n = 1) such as n-propyl dimethylethoxysilane, n-butyl dimethylethoxysilane, n-decyl dimethylethoxysilane, n-hexadecyl dimethylethoxysilane and n-eicosane dimethylethoxysilane; saturated alkyl diethylethoxysilanes (a = 1, m = 2, n = 2) such as n-propyl diethylethoxysilane, n-butyl diethylethoxysilane, n-decyl diethylethoxysilane, n-hexadecyl diethylethoxysilane and n-eicosane diethylethoxysilane; saturated alkyl dipropylethoxysilanes (a = 1, m = 2, n = 3) such as n-butyl dipropylethoxysilane, n-decyl dipropylethoxysilane, n-hexadecyl dipropylethoxysilane and n-eicosane dipropylethoxysilane; saturated alkyl dimethylpropoxysilanes (a = 1, m = 3, n = 1) such as n-propyl dimethylpropoxysilane, n-butyl dimethylpropoxysilane n-decyl dimethylpropoxysilane, n-hexadecyl dimethylpropoxysilane and n-eicosane dimethylpropoxysilane; saturated alkyl diethylpropoxysilanes (a = 1, m = 3. n = 2) such as n-propyl diethylpropoxysilane, n-butyl diethylpropoxysilane, n-decyl diethylpropoxysilane, n-hexadecyl diethylpropoxysilane and n-eicosane diethylpropoxysilane; saturated alkyl dipropylpropoxysilanes (a = 1, m = 3, n = 3) such as n-butyl dipropylpropoxysilane, n-decyl dipropylprapoxysilane, n-hexadecyl dipropylpropoxysilane and n-eicosane dipropylpropoxysilane; saturated alkyl methyldimethoxysilanes (a = 2, m = 1, n = 1) such as n-propyl methyldimethoxysilane, n-butyl methyldimethoxysilane, n-decyl methyldimethoxysilane, n-hexadecyl methyldimethoxysilane and n-eicosane methyldimethoxysilane; saturated alkyl ethyldimethoxysilanes (a = 2, m = 1, n = 2) such as n-propyl ethyldimethoxysilane, n-butyl ethyldimethoxysilane, n-decyl ethyldimethoxysilane, n-hexadecyl ethyldimethoxysilane and n-eicosane ethyldimethoxysilane; saturated alkyl propyldimethoxysilanes (a = 2, m = 1, n = 3) such as n-butyl propyldimethoxysilane, n-decyl propyldimethoxysilane, n-hexadecyl propyldimethoxysilane and n-eicosane propyldimethoxysilane; saturated alkyl methyldiethoxysilanes (a = 2, m = 2, n = 1) such as n-propyl methyldiethoxysilane, n-butyl methyldiethoxysilane, n-decyl methyldiethoxysilane, n-hexadecyl methyldiethoxysilane and n-eicosane methyldiethoxysilane; saturated alkyl ethyldiethoxysilanes (a = 2, m = 2, n = 2) such as n-propyl ethyldiethoxysilane, n-butyl ethyldiethoxysilane, n-decyl ethyldiethoxysilane, n-hexadecyl ethyldiethoxysilane and n-eicosane ethyldiethoxysilane; saturated alkyl propyldiethoxysilanes (a = 2, m =2, n = 3) such as n-butyl propyldiethoxysilane, n-decyl propyldiethoxysilane, n-hexadecyl propyldiethoxysilane and n-eicosane propyldiethoxysilane; saturated alkyl methyldipropoxysilanes (a = 2, m = 3, n = 1) such as n-propyl methyldipropoxysilane, n-butyl methyldipropoxysilane, n-decyl methyldipropoxysilane, n-hexadecyl methyldipropoxysilane and n-eicosane methyldipropoxysilane; saturated alkyl ethyldipropoxysilanes (a = 2, m = 3, n = 2) such as n-propyl ethyldipropoxysilane, n-butyl ethyldipropoxysilane, n-decyl ethyldipropoxysilane, n-hexadecyl ethyldipropoxysilane and n-eicosane ethyldipropoxysilane; saturated alkyl propyldipropoxysilanes (a = 2, m = 3, n = 3) such as n-butyl propyldipropoxysilane, n-decyl propyldipropoxysilane, n-hexadecyl propyldipropoxysilane and n-eicosane propyldipropoxysilane; saturated alkyl trimethoxysilanes (a = 3, m = 1) such as n-propyl trimethoxysilane, n-butyl trimethoxysilane, n-decyl trimethoxysilane, n-hexadecyl trimethoxysilane and n-eicosane trimethoxysilane; saturated alkyl triethoxysilanes (a = 3, m = 2) such as n-propyl triethoxysilane, n-butyl triethoxysilane, n-decyl triethoxysilane, n-hexadecyl triethoxysilane and n-eicosane triethoxysilane; and saturated alkyl tripropoxysilanes (a = 3, m = 3) such as n-propyl tripropoxysilane, n-butyl tripropoxysilane, n-decyl tripropoxysilane, n-hexadecyl tripropoxysilane and n-eicosane tripropoxysilane. They may be used alone or in combination of two or more.

Out of these, n-butyl trimethoxysilane, n-decyl trimethoxysilane, n-hexadecyl trimethoxysilane, n-decyl dimethylmethoxysilane, n-hexadecyl dimethylmethoxysilane, n-butyl triethoxysilane, n-decyl triethoxysilane, n-hexadecyl triethoxysilane, n-decyl ethyldiethoxysilane, n-hexadecyl ethyldiethoxysilane, n-butyl tripropoxysilane, n-decyl tripropoxysilane and n-hexadecyl tripropoxysilane are particularly preferred.

The amount of the silane coupling agent in the composition of the present invention is preferably 0.001 to 10 parts by weight, more preferably 0.001 to 5 parts by weight based on 100 parts by weight of the glass powder. When the amount of the silane coupling agent is too small, the effect of improving the dispersion stability of the glass powder and the effect of improving the flexibility of the formed film forming material layer cannot be fully obtained. When the amount of the silane coupling agent is too large, the viscosity of the composition of the present invention increases along the passage of time during storage, or the reaction between the silane coupling agents occurs, thereby reducing the transmittance of the obtained dielectric layer.

### Plasticizer

The composition of the present invention preferably contains a plasticizer to provide excellent flexibility and combustibility to the formed film forming material layer. The plasticizer is preferably a compound represented by the following formula (3): 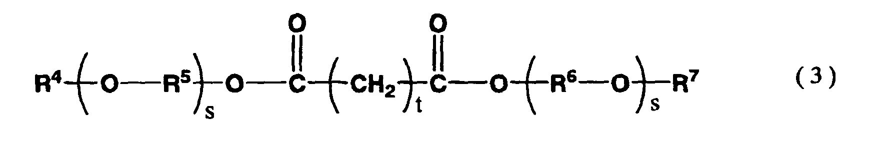 wherein R⁴ and R⁷ are the same or different alkyl groups having 1 to 30 carbon atoms, R⁵ and R⁶ are the same or different methylene groups or alkylene groups having 2 to 30 carbon atoms, s is an integer of 0 to 5, and t is an integer of 1 to 10.

Even when the transfer film comprising the film forming material layer containing the plasticizer is bent, the surface of the film forming material layer does not crack finely and the transfer film has excellent flexibility and can be easily rolled.

Since the plasticizer composed of the compound represented by the above formula (3) is easily decomposed by heat and removed, it does not reduce the transmittance of the dielectric layer obtained by baking the film forming material layer.

In the above formula (3), the alkyl group represented by R⁴ and R⁷ and the alkylene group represented by R⁵ and R⁶ may be linear or branched and saturated or unsaturated.

The number of carbon atoms of the alkyl group represented by R⁴ and R⁷ is 1 to 30, preferably 2 to 20, more preferably 4 to 10.

When the number of carbon atoms of the alkyl group is more than 30, the solubility in the solvent of the plasticizer constituting the composition of the present invention drops with the result that excellent flexibility may not be obtained.

Examples of the compound represented by the above formula (3) include dibutyl adipate, diisobutyl adipate, di-2-ethylhexyl adipate, di-2-ethylhexyl azelate, dibutyl sebacate and dibutyl diglycol adipate. The compound is preferably a compound of the above formula (3) in which t is 2 to 6.

The amount of the plasticizer in the film forming material layer of the transfer film of the present invention is preferably 0.1 to 20 parts by weight, more preferably 0.5 to 10 parts by weight based on 100 parts by weight of the glass powder. When the amount of the plasticizer is too small, the flexibility of the film forming material layer may not be fully improved. When the amount is too large, the adhesion of the film forming material layer made of the obtained composition becomes too high, whereby the handling properties of the transfer film comprising the film forming material layer may deteriorate.

The composition of the present invention may contain other additives such as adhesion providing agent, surface tension modifier, stabilizer and anti-foaming agent as optional components in addition to the above essential ingredients.

A preferred example of the composition of the present invention comprises 100 parts by weight of a mixture of zinc oxide, boron oxide, silicon oxide, potassium oxide, calcium oxide and aluminum oxide (ZnO-B₂O₃-SiO₂-K₂O-CaO-Al₂O₃) as a glass powder, 30 to 70 parts by weight of a copolymer of n-butyl methacrylate, 2-ethylhexyl methacrylate and hydroxypropyl methacrylate as a binder resin, 0.1 to 5 parts by weight of n-decyl trimethoxysilane as a dispersant, 0.1 to 10 parts by weight of di-2-ethylhexyl azelate as a plasticizer and 5 to 30 parts by weight of propylene glycol monomethyl ether as a solvent.

The composition of the present invention can be prepared by kneading together the above glass powder, binder resin, solvent, dispersant, plasticizer and other optional components with a kneader such as a roll kneader, mixer or homo-mixer.

The composition of the present invention prepared as described above is a paste composition having fluidity suitable for coating and a viscosity at room temperature of 1,000 to 30,000 mPa·s, preferably 2,000 to 10,000 mPa·s.

The composition of the present invention can be particularly advantageously used for the manufacture of the transfer film of the present invention which will be detailed hereinafter.

The composition of the present invention can also be advantageously used in the conventionally known method of forming a film forming material layer, that is, the method of forming a film forming material layer by directly applying the composition to the surface of a substrate by screen printing or die coating and drying the coating film.

### Transfer film

The transfer film of the present invention is a composite film advantageously used in the step of forming a dielectric layer for PDP and comprises a film forming material layer formed by applying the composition of the present invention to a support film and drying the coating film. That is, the transfer film of the present invention comprises a film forming material layer containing a lead-free inorganic glass powder and a binder resin on the support film. The film forming material layer may contain the above optional components such as a dispersant and a plasticizer.

### Constitution of transfer film:

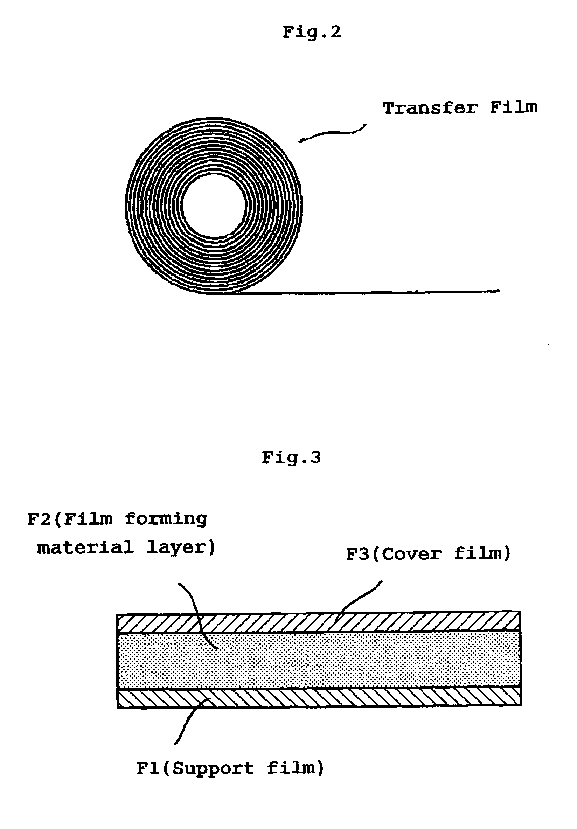

Fig. 2 is a sectional view of the rolled transfer film of the present invention

Fig. 3 is a sectional view showing the layer constitution of the transfer film.

The transfer film shown in Fig. 3 is a composite film used to form a dielectric layer constituting a PDP as an example of the transfer film of the present invention. In general, the transfer film is composed of a support film F1. a film forming material layer F2 which is formed on the surface of the support film F1 and can be removed from the support film F1, and a cover film F3 which is formed on the surface of the film forming material layer F2 and can be easily removed from the film forming material layer F2. The cover film F3 may not be existent depending on the properties of the film forming material layer F2.

The support film F1 constituting the transfer film is preferably a resin film having heat resistance, solvent resistance and flexibility. When the support film F1 has flexibility, the paste composition of the present invention can be applied with a roll coater or blade coater. Thereby, a film forming material layer uniform in thickness can be formed, and the formed film forming material layer can be stored and supplied while it is rolled.

Examples of the resin constituting the support film F1 include polyethylene terephthalate, polyester, polyethylene, polypropylene, polystyrene, polyimide, polyvinyl alcohol, polyvinyl chloride, fluorine-containing resins such as polyfluoroethylene, nylon and cellulose. The thickness of the support film F1 is, for example, 20 to 100 µm.

The film forming material layer F2 constituting the transfer film turns to a glass sintered body (dielectric layer) by baking and contains the lead-free glass powder and the binder resin as essential ingredients.

The thickness of the film forming material layer F2 which differs according to the content of the glass powder and the type and size of a panel is, for example, 5 to 200 µm, preferably 10 to 100 µm. When the thickness is smaller than 5 µm, the finally formed dielectric layer becomes too thin and desired dielectric properties may not be ensured. When the thickness is 5 to 200 µm, the thickness of the dielectric layer required for a large-sized panel can be fully ensured.

The cover film F3 constituting the transfer film protects the surface (surface in contact with the glass substrate) of the film forming material layer F2. This cover film F3 is also preferably a resin film having flexibility. Examples of the resin forming this cover film F3 are the same as those enumerated for the support film F1. The thickness of the cover film F3 is, for example, 20 to 100 µm.

### Process for producing a transfer film:

The transfer film of the present invention can be produced by forming the film forming material layer (F2) on the support film (F1) and the cover film (F3) on the film forming material layer (F2) by contact bonding.

To form the film forming material layer, the composition of the present invention is applied to the support film and the coating film is dried to remove part or all of the solvent.

To apply the composition of the present invention to the support film, the composition is preferably applied with a roll coater, blade coater such as a doctor blade, curtain coater or wire coater because a coating film as thick as 20 µm or more and uniform in film thickness can be formed efficiently.

The surface of the support film to which the composition of the present invention is to be applied is preferably subjected to a release treatment. Thereby, after the transfer of the film forming material layer, the support film can be easily removed from the film forming material layer.

The coating film of the composition of the present invention formed on the support film is dried to remove part or all of the solvent and turns to a film forming material layer constituting the transfer film. As for the conditions for drying the coating film of the composition of the present invention, the coating film is dried at 40 to 150°C for 0.1 to 30 minutes. The amount of the residual solvent after drying, that is, the content of the solvent in the film forming material layer is generally 10wt% or less, preferably 0.1 to 5 wt% from the viewpoint of making the film forming material layer exhibit adhesion to the substrate and suitable form retaining properties.

The surface of the cover film formed on the film forming material layer formed as described above by thermal contact bonding is also preferably subjected to a release treatment. Thereby, the cover film can be easily removed from the film forming material layer before the film forming material layer is transferred.

### Transfer of film forming material layer (usage of transfer film):

The film forming material layer formed on the support film is transferred to the surface of the substrate in a lump. Since the transfer film of the present invention enables the film forming material layer to be formed on a glass substrate surely by this simple operation, the improvement of the step of forming a PDP constituent element such as a dielectric layer, for example, the efficiency of the step can be enhanced, and the improvement of the quality of the formed constituent element, for example, the stable dielectric properties of the dielectric layer can be obtained.

### PDP manufacturing process (formation of dielectric layer)

The PDP manufacturing process of the present invention comprises the steps of forming a film forming material layer obtained from the composition of the present invention on a substrate and baking the film forming material layer to form a dielectric film on the surface of the substrate. Preferably, the film forming material layer constituting the transfer film of the present invention is transferred to the surface of the substrate and baked to form the dielectric layer on the surface of the substrate.

An example of the step of transferring the film forming material layer of the transfer film shown in Fig. 2 and Fig. 3 is given below.
1. The rolled transfer film is cut to a size corresponding to the area of the substrate.
2. After the cover film (F3) is removed from the surface of the film forming material layer (F2) of the cut transfer film, the transfer film is placed upon the substrate in such a manner that the surface of the film forming material layer (F2) comes into contact with the surface of the substrate.
3. A heating roller is moved over the transfer film on the substrate to thermally contact bond the transfer film to the substrate.
4. The support film (F1) is removed from the film forming material layer (F2) fixed on the substrate by thermal contact bonding.

The film forming material layer (F2) formed on the support film (F1) is transferred to the substrate by the above operation. As for the transfer conditions, the surface temperature of the heating roller is 60 to 120° C, the pressure of the heating roller is 1 to 5 kg/cm², and the moving speed of the heating roller is 0.2 to 10.0 m/min. A laminator may be used to carry out this operation (transfer step). The substrate may be preheated. The preheating temperature may be 40 to 100°C.

The film forming material layer (F2) transferred to the surface of the substrate is baked to become a glass sintered body (dielectric layer). For baking, the substrate to which the film forming material layer (F2) has been transferred is placed in a high-temperature atmosphere. Thereby, the organic substances contained in the film forming material layer (F2) such as the binder resin, the residual solvent and other additives are decomposed and removed, and the lead-free glass powder is molten and sintered. The baking temperature which differs according to the melting temperature of the substrate and the constituent components of the film forming material layer is, for example, 350 to 700° C, preferably 450 to 600° C.

### Examples

The following examples are provided for the purpose of further illustrating the present invention but are in no way to be taken as limiting. "Parts" in the following examples means "parts by weight".

### Example 1

### (1) preparation of glass powder-containing resin composition:

100 parts of a mixture of zinc oxide, boron oxide, silicon oxide, potassium oxide, calcium oxide and aluminum oxide (ZnO-B₂O₃-SiO₂-K₂O-CaO-Al₂O₃) (softening point of 565°C, specific gravity of 2.79) as a glass-powder, 37 parts of a copolymer of n-butyl methacrylate, 2-ethylhexyl methacrylate and hydroxypropyl methacrylate (weight ratio of 30/60/10, weight average molecular weight of 100,000) as a binder resin, 1.6 parts of n-decyl trimethoxysilane as a dispersant, 4 parts of di-2-ethylhexyl azelate as a plasticizer and 11 parts of ethyl-3-ethoxypropionate as a solvent were kneaded together with a disperser to prepare the composition of the present invention having a viscosity of 3,800 mPa·s (2.5 rpm, TV-30 type viscometer of Toki Sangyo Co., Ltd.).

The specific gravity of the glass powder was measured by the following pycnometering method. A sample and a solvent were fed to a Gay-Lussac type pycnometer having a capacity of 25 cm³ to measure the total weight of these, and the volume of the solvent was obtained from temperature to calculate the volume of the sample. Thereafter, the weight of the sample was calculated from the difference between the theoretical weight and the weight including the sample to obtain the specific gravity of the sample (weight of sample/volume of sample).

3 to 10 g of the glass powder was used and xylene was used as an immersion liquid (25°C) to carry out vacuum deaeration for about 5 hours in order to obtain the density of the glass powder.

### production and evaluation of transfer film (flexibility and handling properties):

The composition of the present invention prepared in (1) was applied to a support film (width of 400 mm, length of 30 m, thickness of 38 µm) made of polyethylene terephthalate (PET) which had been subjected to a release treatment with a blade coater, and the formed coating film was dried at 100°C for 5 minutes to remove the solvent. Thereby, a 65 µm-thick film forming material layer was formed on the support film. A cover PET film (width of 400 mm, length of 30 m, thickness of 38 µm) which had been subjected to a release treatment was joined to the film forming material layer to produce the transfer film of the present invention having constitution as shown in Fig. 2.

The obtained transfer film had flexibility and could be easily rolled. Even when this transfer film was bent, the surface of the film forming material layer did not crack. Therefore, the film forming material layer had excellent flexibility.

The cover film was removed from this transfer film, and the transfer film, that is, the laminate consisting of the support film and the film forming material layer was assembled with a glass substrate without applying pressure to the laminate in such a manner that the surface of the film forming material layer came into contact with the surface of the glass substrate. When the transfer film was removed from the surface of the glass substrate, the film forming material layer showed suitable adhesion to the glass substrate and the transfer film could be removed without causing a cohesive failure in the film forming material layer. The handling properties of the transfer film were thus excellent.

### Transfer of film forming material layer:

After the cover film was removed from the transfer film obtained in (2), the transfer film, that is, the laminate consisting of the support film and the film forming material layer was assembled with a glass substrate for 21-inch panels in such a manner that the surface of the film forming material layer came into contact with the surface (bus electrode fixed surface) of the glass substrate and thermally contact bonded to the glass substrate with a heating roll. As for the thermal contact bonding conditions, the surface temperature of the heating roll was 90°C, the pressure of the heating roll was 2 kg/cm², and the moving speed of the heating roll was 0.8 m/min.

After the end of the thermal contact bonding, the support film was removed from the film forming material layer fixed on the surface of the glass substrate by thermal bonding to complete the transfer of the film forming material layer.

When the support film was removed in this transfer step, the film forming material layer did not cause a cohesive failure and had sufficiently high film strength. Further, the transferred film forming material layer had high adhesion to the surface of the glass substrate.

### Baking of film forming material layer (formation of dielectric layer):

The glass substrate to which the film forming material layer had been transferred in (3) was placed in a kiln, the inside temperature of the kiln was raised to 580° C at a rate of 10° C/min, and the film forming material layer was baked at 580° C for 45 minutes to form a dielectric layer composed of a glass sintered body on the surface of the glass substrate. When the thickness (average film thickness and tolerance) of this dielectric layer was measured, it was 30 µm±0.4 µm, which means that the dielectric layer had excellent uniformity in film thickness.

When the surface roughnesses (Ra, Ry, Rz) of the obtained dielectric layer were measured 3-dimensionally based on JIS standard (B 0601) with a non-contact film thickness meter (NH-3 of Ryoukou Co., Ltd.). Ra was 0. 04 µm, Ry was 0.26 µm and Rz was 0.15 µm, which means that the dielectric layer had excellent surface smoothness. When the transmittance of the obtained dielectric layer was measured (measurement wavelength of 550 nm), it was 81 %, which means that the dielectric layer had excellent transparency.

### Examples 2 to 4

The composition of the present invention was prepared in the same manner as in Example 1 except that the amount of the binder resin was changed as shown in Table 1 below to produce and evaluate a transfer film. A dielectric layer was formed in the same manner as in Example 1 to measure its surface roughnesses and transmittance. The results are shown in Table 1.

### Example 5

The composition of the present invention was prepared in the same manner as in Example 1 except that the amount of the binder resin was changed to 37 parts and a mixture of zinc oxide, boron oxide, silicon oxide, potassium oxide, aluminum oxide, calcium oxide and strontium oxide (ZnO-B₂O₃-SiO₂-K₂O-Al₂O₃-CaO-SrO) (softening point of 565° C, specific gravity of 2.72) was used as the glass powder to produce and evaluate a transfer film. A dielectric layer was formed in the same manner as in Example 1 to measure its surface roughnesses and transmittance. The results are shown in Table 1.

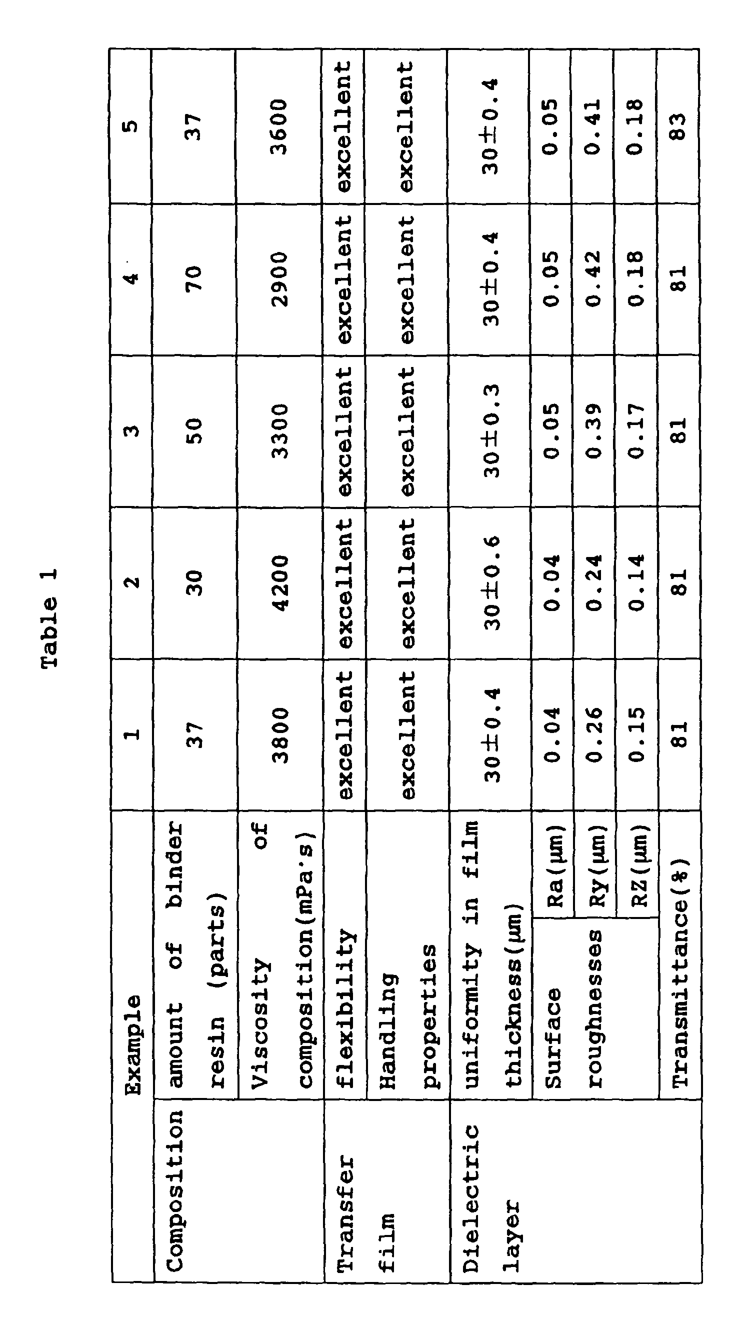

### Example 6

The composition of the present invention was prepared in the same manner as in Example 1 except that 40 parts of a copolymer of n-butyl methacrylate, 2-ethylhexyl methacrylate and 2-ethoxyethyl methacrylate (weight ratio of 30/60/10, weight average molecular weight of 120,000) was used as the binder resin to produce a transfer film. A glass substrate to which the transfer film had been transferred was placed in a kiln, the inside temperature of the kiln was raised to 580° C at a rate of 10° C/min, and the film forming material layer was baked at 580°C for 30 minutes to form a dielectric layer composed of a glass sintered body on the surface of the glass substrate. When the film thickness (average film thickness and tolerance) of this dielectric layer was measured, it was 30 µm±0.4 µm, which means that the dielectric layer had excellent uniformity in film thickness.

When the surface roughnesses of the obtained dielectric layer were measured in the same manner as in Example 1, Ra was 0.03 µm, Ry was 0.14 µm and Rz was 0.11 µm, which means that the dielectric layer had excellent surface smoothness though the baking time was shortened. When the transmittance of the obtained dielectric layer was measured (measurement wavelength of 550 nm), it was 86 %, which means that the dielectric layer had excellent transparency. The results are shown in Table 2.

### Examples 7 to 9

The composition of the present invention was prepared in the same manner as in Example 6 except that the amount of the binder resin was changed as shown in Table 2 below to produce and evaluate a transfer film. A dielectric layer was formed in the same manner as in Example 6 to measure its surface roughnesses and transmittance. The results are shown in Table 2.

### Example 10

The composition of the present invention was prepared in the same manner as in Example 6 except that the amount of the binder resin was changed to 40 parts and a mixture of zinc oxide, boron oxide, silicon oxide, potassium oxide, aluminum oxide, calcium oxide and strontium oxide (ZnO-B₂O₃-SiO₂-R₂O-Al₂O₃-CAO-SrO) (softening point of 565°C, specific gravity of 2.72) was used as the glass powder to produce and evaluate a transfer film. A dielectric layer was formed in the same manner as in Example 6 to measure its surface roughnesses and transmittance. The results are shown in Table 2.

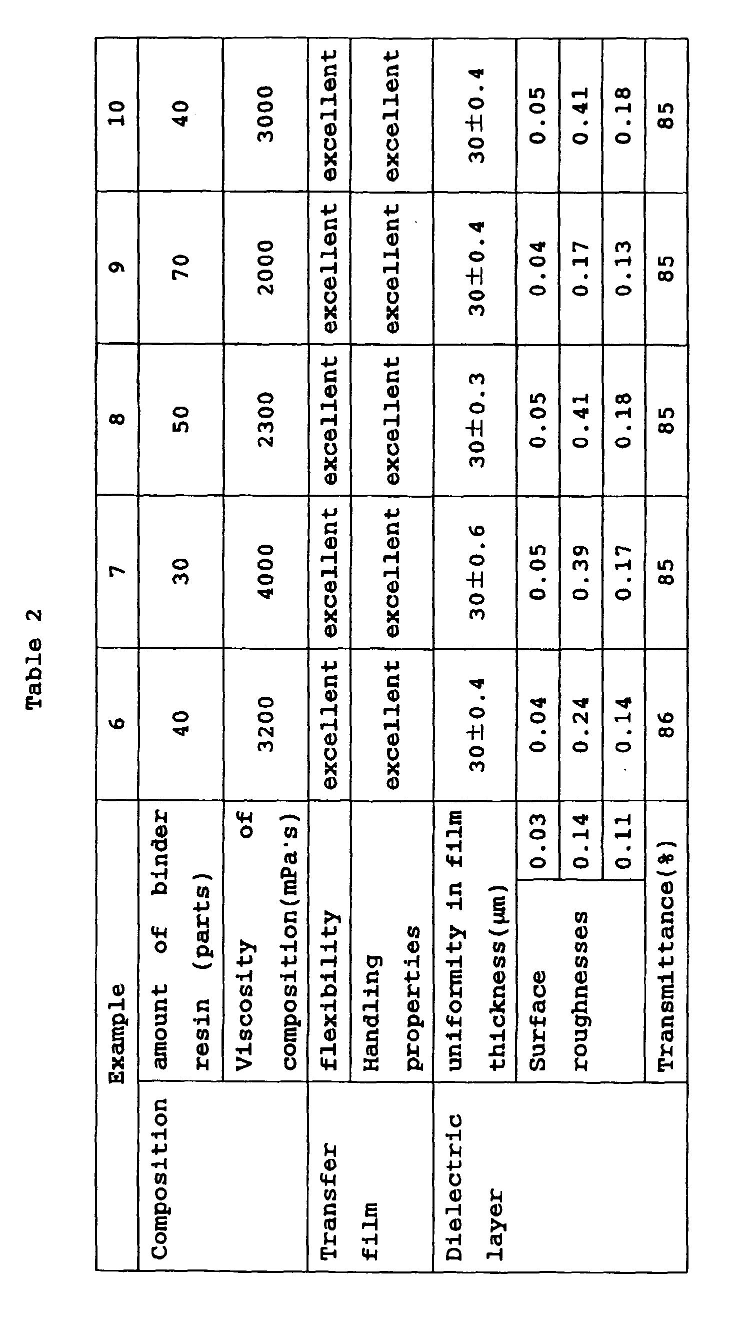

### Comparative Example 1

An attempt was made to prepare the composition of the present invention in the same manner as in Example 1 except that the amount of the binder resin was changed to 23 parts. However, the glass powder could not be dispersed in the resin well and it was difficult to produce a paste composition.

### Comparative Example 2

The composition of the present invention was prepared in the same manner as in Example 1 except that the amount of the binder resin was changed to 90 parts to produce a transfer film. The composition was applied to a support film with a blade coater and the formed coating film was dried at 100°C for 5 minutes to remove the solvent so as to form a film forming material layer on the support film. However, a large number of defects called "pinholes" were formed on the surface of the film forming material layer and a smooth film could not be formed.

### Comparative Example 3

An attempt was made to prepare the composition of the present invention in the same manner as in Example 6 except that the amount of the binder resin was changed to 20 parts. However, the glass powder could not be dispersed in the resin well and it was difficult to produce a paste composition.

### Comparative example 4

The composition of the present invention was prepared in the same manner as in Example 6 except that the amount of the binder resin was changed to 90 parts to produce a transfer film. The composition was applied to a support film with a blade coater and the formed coating film was dried at 100°C for 5 minutes to remove the solvent so as to form a film forming material layer on the support film. However, a large number of defects called "pinholes" were formed on the surface of the film forming material layer and a smooth film could not be formed.

### Comparative Example 5

The composition of the present invention was prepared in the same manner as in Example 6 except that a copolymer of n-butyl methacrylate, 2-ethylhexyl methacrylate and hydroxyethyl methacrylate (weight ratio of 30/60/10, weight average molecular weight of 110,000) was used as the binder resin to produce and evaluate a transfer film. A dielectric layer was formed in the same manner as in Example 6 to measure its surface roughnesses and transmittance. Since the glass powder-containing resin layer was not molten completely, the dielectric layer had a thickness of 30 µm±1.1 µm.

When the surface roughnesses of the obtained dielectric layer were measured in the same manner as in Example 6, Ra was 0.86 µm, Ry was 4.71 µm and Rz was 3.31 µm, which means that the dielectric layer did not have excellent surface smoothness. When the transmittance of the obtained dielectric layer was measured (measurement wavelength of 550 nm), it was 82 %.

As described above, the composition and the transfer film of the present invention provide the following effects.
(1) As the composition does not contain lead, the working environment is improved and further a waste disposal problem is eliminated.
(2) A dielectric layer having excellent surface smoothness can be formed efficiently.
(3) The film forming material layer has excellent flexibility so that its surface is not cracked by bending.
(4) The transfer film has excellent flexibility so that it can be easily rolled.
(5) The film forming material layer has high adhesion and excellent handling properties.
(6) The film forming material layer has excellent transferability, that is, thermal adhesion to a substrate.

The production process of the present invention provides the following effects.
(1) As the composition does not contain lead, the working environment is improved and further a waste disposal problem is eliminated.
(2) A thick dielectric layer can be formed efficiently.
(3) A dielectric layer required for a large-sized panel can be formed efficiently.
(4) A PDP comprising a dielectric layer which is excellent in uniformity of film thickness and surface smoothness can be formed efficiently.

A glass powder-containing resin composition comprising (A) 100 parts by weight of a lead-free inorganic glass powder and (B) 30 to 70 parts by weight of a binder resin, and a transfer film obtained from this composition.

A dielectric layer having excellent surface smoothness can be formed efficiently, the film forming material layer has excellent flexibility so that its surface is not cracked by bending, and the transfer film has excellent flexibility and can be easily rolled. Since the film forming material layer exhibits suitable adhesion, the handling properties of the transfer film are excellent, and the transferability of the film forming material layer, that is, the thermal adhesion of the film forming material layer to the substrate is excellent.

## Claims

1. A glass powder-containing resin composition comprising (A) 100 parts by weight of a lead-free inorganic glass powder and (B) 30 to 70 parts by weight of a binder resin.

2. The glass powder-containing resin composition according to claim 1, wherein the glass powder (A) has a specific gravity measured by a pycnometering method of 2.0 to 4.0.

3. The glass powder-containing resin composition according to claim 1, wherein the binder resin (B) is a polymer having a structural unit represented by the following formula (I): 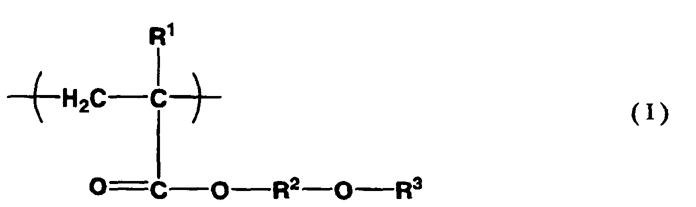 wherein R¹ is a hydrogen atom or methyl group, R² is a methylene group or alkylene group having 2 to 4 carbon atoms, and R³ is an alkyl group having 1 to 4 carbon atoms.

4. The glass powder-containing resin composition according to claim 3, wherein R¹ in the above formula (I) is a methyl group.

5. The glass powder-containing resin composition according to claim 3, wherein the structural unit represented by the above formula (I) is at least one structural unit derived from at least one monomer selected from the group consisting of 2-methoxyethyl (meth)acrylate, 2-ethoxyethyl (meth)acrylate, 2-n-propoxyethyl (math)acrylate, 2-n-butoxyethyl (meth)acrylate and 2-methoxy-n-butyl (meth)acrylate.

6. The glass powder-containing resin composition according to claim 1 which further comprises a silane coupling agent represented by the following formula (2): 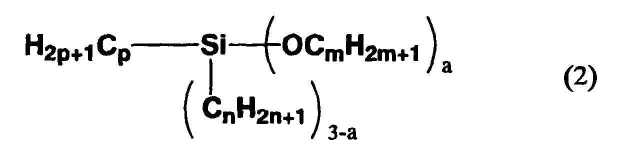 wherein p is an integer of 3 to 20, m is an integer of 1 to 3, n is an integer of 1 to 3, and a is an integer of 1 to 3.

7. The glass powder-containing resin composition according to claim 1 which further comprises a plasticizer compound represented by the following formula (3): 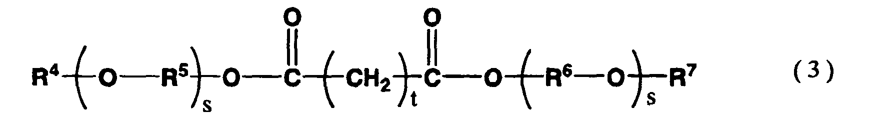 wherein R⁴ and R⁷ are the same or different alkyl groups having 1 to 30 carbon atoms, R⁵ and R⁶ are the same or different methylene groups or alkylene groups having 2 to 30 carbon atoms, s is an integer of 0 to 5, and t is an integer of 1 to 10.

8. A transfer film having a film forming material layer obtained from the glass powder-containing resin composition of claim 1 on a support film.

9. A process for manufacturing a plasma display panel, comprising the steps of forming a film forming material layer obtained from the glass powder-containing resin composition of claim 1 on a substrate and baking the film forming material layer to form a dielectric layer on the substrate.

10. The process for manufacturing a plasma display panel according to claim 9, wherein the film forming material layer of the transfer film of claim 8 is transferred to the substrate to form the film forming material layer on the substrate.
